# EUROPÄISCHE PATENTSCHRIFT

(11) **EP 2 724 979 B1**
(45) Veröffentlichungstag und Bekanntmachung des Hinweises auf die Patenterteilung: **08.06.2016**
(21) Anmeldenummer: 13188330.8
(22) Anmeldetag: 11.10.2013
(51) Int. Cl.: B67B 3/20, H02K 21/12, H02K 5/128

(54) **Verschließer für Behälter**
Capper for containers
Machine de fermeture pour récipients

(30) Priorität: 29.10.2012 DE 102012219756
(43) Veröffentlichungstag der Anmeldung: 30.04.2014
(73) Patentinhaber: Krones AG, 93073 Neutraubling (DE)
(72) Erfinder: Sobiech, Bernd, 93073 Neutraubling (DE)
(74) Vertreter: Grünecker Patent- und Rechtsanwälte PartG mbB

(56) Entgegenhaltungen:
- EP-A1- 1 186 873
- EP-A2- 2 221 272
- WO-A2-2010/118806
- DE-A1- 10 322 465
- US-A- 3 031 822

## Beschreibung

Die vorliegende Erfindung betrifft einen Verschließer für Behälter, insbesondere Flaschen, gemäß dem Oberbegriff des Anspruchs 1 und ein entsprechendes Verfahren zum Verschließen von Behältern, insbesondere Flaschen.

Eine gattungsgemäße Vorrichtung ist aus der EP 2 221 272 A2 bekannt.

Schraubverschlüsse von Behältern, wie beispielsweise Flaschen, können bekanntermaßen in Rundläufermaschinen mit mehreren umfänglich angeordneten und um eine gemeinsame Achse rotierenden Verschließern verschlossen werden, wobei die Verschlusskappen jeweils in einem Verschließkopf gehalten und diese nach Aufsetzen auf die jeweilige Behältermündung sowohl gedreht als auch der Gewindesteigung entsprechend abgesenkt werden. Alternativ können auch die Behälter während des Aufdrehens der Verschlusskappe entsprechend angehoben werden. Die Drehbewegung des Verschließkopfs erfolgt dabei mittels eines Elektromotors und die Absenkbewegung entweder durch eine Steuerkurve oder einen Linearmotor.

Allerdings würde die Verschlusskappe so bei einem fehlenden Behälter im Verschließkopf verbleiben und beim darauffolgenden Arbeitszyklus mit der nächsten Verschlusskappe kollidieren. Um dies zu verhindern, weist jeder Verschließkopf üblicherweise eine Auswerfstange auf, mit der die Verschlusskappe vor dem nächsten Umlauf aus dem Verschließkopf entfernt wird. Nachteilig dabei ist, dass die im Verschließer behandelten Behälter nicht vor Verschmutzungen oder Keimen geschützt sind.

Bei vielen Anwendungen werden deshalb die Behälter in der Abfüllanlage und im Verschließer in einem Reinraum geführt, um einerseits Mittel für die Konservierung, Pasteurisierung, etc. einzusparen und andererseits, um die Behälter mit besonders keimempfindlichen Produkten befüllen zu können. Ebenso können in einem derartigen Reinraum die Behälter und die darin abgefüllten Produkte vor Leckagen der Antriebselemente geschützt werden. Um die Anzahl der Keime und Verschmutzungen im Reinraum weiter abzusenken, werden dabei möglichst viele Komponenten des Verschließers außerhalb des Reinraums angeordnet.

Hierzu offenbart die EP 2 221 272 A2 eine Vorrichtung zum Verschließen von Behältnissen mit berührungsloser Drehmomenterzeugung. Hierbei wird eine Rundläufermaschine mit mehreren Verschließern offenbart, wobei jeweils das Drehmoment eines Motors, der Außerhalb eines Reinraums angeordnet ist, mittels einer Magnetkupplung berührungslos auf einen Verschließkopf innerhalb des Reinraums übertragen wird. Die Hubbewegung der Verschließköpfe wird hier über eine Steuerkurve innerhalb des Reinraums bewirkt.

Die WO 2010/118806 offenbart einen Verschließer für Schraubkappen bzw. -verschlüsse, wobei ein Antrieb durch eine Magnetkupplung vom Verschließkopf hermetisch getrennt wird. Nachteilig dabei ist, dass derartige Magnetkupplungen zur Übertragung der notwendigen Kräfte entsprechend groß dimensioniert werden müssen und somit auch die Auswerfstangen relativ lang sind. Folglich müssen die Auswerfstangen sehr stabil und damit kostenaufwändig konstruiert sein.

Die DE 103 22 465 A1 offenbart eine rohrförmige Trennhülse für Magnetkupplungsantriebe oder Spaltrohrmotoren, die zur Vermeidung von Wirbelströmen aus Fasern gewickelt wird.

Aufgabe der vorliegenden Erfindung ist es, einen Verschließer für Behälter, mit einem in einem Reinraum wirkenden Verschließkopf bereitzustellen, bei dem der Mechanismus zum Auswerfen von Behälterverschlüssen einfacher konstruiert und weniger kostenaufwändig in der Herstellung ist.

Die Erfindung löst diese Aufgabe bei einem Verschließer für Behälter mit den Merkmalen des Anspruchs 1.

Dadurch, dass der Verschließkopf mit dem Rotor des Elektromotors verbunden ist, können die der Auslegung des Verschließers entsprechenden Kräfte vom Magnetfeld des Stators direkt auf den Rotor wirken und so auf den Verschließkopf übertragen werden. Somit müssen die Kräfte nicht über eine groß dimensionierte Magnetkupplung übertragen werden. Zusätzlich ist dadurch das Element zur Reinraumtrennung besonders kompakt und stabil ausgeführt und eignet sich als Aufnahmeelement für die Auswerfstange. Dadurch kann die Auswerfstange besonders kurz ausgeführt werden, da sie nicht oberhalb des Elements zur Reinraumtrennung an weiteren Streben abgestützt werden muss. Anders ausgedrückt, kann der Reinraum einerseits durch das zwischen dem Stator und dem Rotor angeordnete Element zur Reinraumtrennung von der Umgebung hermetisch abgeschlossen werden und andererseits bietet die kompakte Ausführung dieses Antriebs eine besonders günstige und stabile Konstruktion, um die Auswerfstange an dem Element zur Reinraumtrennung zu befestigen. Darüber hinaus müssen keine zusätzlichen Abdichtungsmittel, wie Dichtungen, eingesetzt werden, um eine Durchführung zur Aufhängung der Auswerfstange außerhalb des Reinraums zu ermöglichen.

Der Verschließer kann in einer Getränkeverarbeitungsanlage angeordnet sein.

Die Behälter können insbesondere Kunststoffflaschen, Glasflaschen, Dosen und/oder Tuben umfassen. Die Behälter können dabei Getränke, Lebensmittel, Hygieneartikel, Pasten, chemische, biologische und/oder pharmazeutische Produkte enthalten. Besonders geeignet ist der Verschließer für das Verschließen von PET-Flaschen, die einen Halskragen aufweisen, an welchem sie zumindest während des Befüllens und Verschließens gehalten werden können. Dies ist insbesondere der Fall, wenn mikrobiologisch empfindliche Abfüllprodukte in kaltaseptischen Abfüllanlagen abgefüllt werden. Die Behälter können eine Behältermündung zum Aufschrauben der Behälterverschlüsse umfassen. Denkbar sind ebenso andere Verschlüsse, wie beispielsweise Aufdrückverschlüsse oder Kronkorken.

Die Behälter können im Verschließer in einem Reinraum behandelt werden. Ein Reinraum kann dabei ein keim- oder schmutzpartikelverminderter Bereich sein. Der Reinraum kann einen Überdruck gegenüber der Umgebung aufweisen.

Der Elektromotor kann mit einer Motorsteuerung oder -regelung verbunden sein. Der Elektromotor kann ein bürstenloser Gleichstrom- oder ein Drehstrommotor sein. Der Rotor kann der Anker des Elektromotors und/oder der Läufer eines Linearmotors sein. Der Stator kann eine Anordnung von mehreren Elektromagneten sein, die den Rotor umgeben. Die Elektromagnete können jeweils Spulen sein, die insbesondere um einen ferromagnetischen Kern gewickelt sind. Der Stator kann in Längsrichtung länger ausgebildet sein als der Rotor.

Der Verschließer kann Behälter mit Behälterverschlüssen verschließen, insbesondere mittels des Elektromotors und dem damit verbundenen Verschließkopf, der dazu eine Hubbewegung und/oder eine Drehbewegung ausführt. Der Verschließkopf kann mit einem Greifmechanismus ausgebildet sein, der einen Aufnahmebereich für die Behälterverschlüsse umfasst. Der Verschließer kann eine Aufnahmestation für Behälterverschlüsse umfassen, bei der der Verschließkopf die Behälterverschlüsse aufgreift.

Der Verschließkopf und die Auswerfstange können dazu ausgebildet sein, eine vertikale Relativbewegung zueinander auszuführen. Dadurch, dass die Auswerfstange an dem ersten Ende mit dem Element zur Reinraumtrennung verbunden ist, hat die Auswerfstange einen festen vertikalen Bezug zum Element zur Reinraumtrennung. Dadurch, dass der Verschließkopf mit dem Rotor verbunden ist und sich der Rotor gegenüber dem Stator und damit gegenüber dem Element zur Reinraumtrennung vertikal bewegen kann, wird die vertikale Relativbewegung des Verschließkopfs gegenüber der Auswerfstange bewirkt. Durch die vertikale Relativbewegung können die Behälterverschlüsse aus dem Verschließkopf ausgeworfen werden, insbesondere dadurch, dass die Auswerfstange in den Aufnahmebereich für Behälterverschlüsse hineinragt.

Die Auswerfstange kann an dem ersten Ende mit dem Element zur Reinraumtrennung fest oder lösbar verbunden sein. Die Auswerfstange und/oder das Element zur Reinraumtrennung können einen Schraubmechanismus umfassen, um beide lösbar miteinander zu verbinden.

Der Rotor und der Verschließkopf können um die Auswerfstange herum und konzentrisch zu deren Längsachse angeordnet sein. Die Auswerfstange kann als Rundstab ausgebildet sein. Dadurch kann die Auswerfstange in einer zylindrischen Längsbohrung im Verschließkopf oder in einer zylindrischen Längsbohrung im Rotor aufgenommen werden. Dadurch ist der Verschließkopf bzw. der Rotor besonders einfach herstellbar.

Die Auswerfstange ist erfindungsgemäß als Führung des Rotors und/oder des Verschließkopfs ausgebildet .

Dadurch, dass die Auswerfstange an dem ersten Ende mit dem Element zur Reinraumtrennung verbunden ist, kann diese an dem ersten Ende besonders stabil befestigt werden und eignet sich demzufolge besonders gut als Führung. Durch die Ausbildung der Auswerfstange als Führung ist ein besonders einfacher und damit kostengünstiger Aufbau des Verschließers möglich. Zwischen der Auswerfstange und dem Rotor und/oder dem Verschließkopf kann ein Lager angeordnet sein. Das Lager kann ein Kugel- und/oder Wälzlager umfassen. Dadurch kann die Führung besonders leichtgängig ausgebildet werden.

Eine zylindrische Außenfläche der Auswerfstange und eine zylindrische Innenfläche des Rotors und/oder eine zylindrische Innenfläche des Verschließkopfs können als Gleitlager ausgebildet sein. Dadurch ergibt sich ein besonders einfacher und kostengünstiger Aufbau zur Führung des Rotors und/oder des Verschließkopfs. Die zylindrische Außenfläche der Auswerfstange und die zylindrische Innenfläche des Rotors und/oder eine zylindrische Innenfläche des Verschließkopfs können zueinander als Spielpassung ausgebildet sein. Die Auswerfstange kann aus einem anderen Material ausgebildet sein wie der Rotor und/oder der Verschließkopf. Zwischen der zylindrischen Außenfläche der Auswerfstange und der zylindrischen Innenfläche des Rotors und/oder der zylindrischen Innenfläche des Verschließkopfs kann eine Hülse angeordnet sein. Die Hülse kann aus einem Kunststoff bestehen, insbesondere aus Teflon.

Ein Sicherungselement kann mit der Auswerfstange fest oder lösbar verbunden sein und als mechanischer Anschlag für eine untere Anschlagsposition des Verschließkopfs ausgebildet sein. Dadurch kann der Rotor und damit der Verschließkopf bei einer Stromlosigkeit des Stators nicht aus dem Verschließer herausfallen. Dadurch, dass das Sicherungselement lösbar ausgebildet ist, kann bei einem Service des Verschließers das Sicherungselement entfernt werden und der Verschließkopf und/oder der Rotor aus dem Verschließer entnommen werden. Das Sicherungselement kann mit einem Gewinde lösbar an der Auswerfstange verbunden sein. Das Sicherungselement kann mit dem zweiten Ende der Auswerfstange verbunden sein. Das Sicherungselement kann im Querschnitt größer ausgebildet sein als die Auswerfstange.

Das Sicherungselement kann zur Ausbildung des mechanischen Anschlags eine plane, konische und/oder sphärische Fläche umfassen, die insbesondere einen größeren Außendurchmesser aufweist als die Auswerfstange und der Verschließkopf oder der Rotor kann eine entsprechende Gegenfläche umfassen. Dadurch kann der mechanische Anschlag besonders einfach und damit kostengünstig gefertigt werden. Zwischen dem Sicherungselement und der Gegenfläche kann ein elastisches Element angeordnet sein, um mechanische Stöße beim Herabfallen des Verschließkopfs abzufangen.

Das Sicherungselement kann mit dem zweiten Ende der Auswerfstange verbunden sein, insbesondere wobei eine Stirnfläche des Sicherungselements zum Auswurf von Behälterverschlüssen ausgebildet ist. Das Sicherungselement kann zur lösbaren Verbindung mit dem zweiten Ende der Auswerfstange mit einem Gewinde ausgebildet sein. Dadurch kann das Sicherungselement besonders einfach von der Auswerfstange gelöst werden, um den Verschließkopf bzw. den Rotor zum Service zu entnehmen.

Das Sicherungselement kann den mechanischen Anschlag in einer Sicherungsposition bilden und in einer Freigabeposition eine Entnahme des Verschließkopfs aus dem Verschließer heraus freigeben, wobei das Sicherungselement zwischen der Sicherungsposition und der Freigabeposition hin- und herbewegbar ausgebildet ist. Dadurch kann das Sicherungselement besonders einfach und schnell ohne Werkzeug zwischen der Sicherungsposition und der Freigabeposition hin- und herbewegt werden. Das Sicherungselement kann mit einer Feder derart vorgespannt sein, dass es sich sicher in der Sicherungsposition befindet, insbesondere ohne Einwirkung äußerer Kräfte.

Mit dem Anspruch 9 stellt die Erfindung weiterhin eine Abfüllanlage mit einem Verschließer nach wenigstens einem der Ansprüche 1-8 bereit. Die Abfüllanlage kann eine Getränkeabfüllanlage sein, insbesondere wobei stromabwärts einer Füllmaschine ein Verschließkarussell angeordnet ist, in welchem die im Füllkarussell befüllten Behälter verschlossen werden.

Mit dem Anspruch 10 stellt die Erfindung weiterhin ein Verfahren zum Verschließen von Behältern, insbesondere von Flaschen, mit Behälterverschlüssen bereit, gemäß dem ein Stator eines Elektromotors ein Magnetfeld erzeugt, das durch eine Reinraumtrennung hindurch zur Bewegung eines Rotors wirkt und der Rotor einen Verschließkopf antreibt, wobei die Verschlüsse mit einer Auswerfstange aus dem Verschließkopf ausgeworfen werden können und die Auswerfstange den Rotor und/oder den Verschließkopf führt.

Dadurch, dass das Magnetfeld des Stators durch die Reinraumtrennung hindurch auf den Rotor wirkt, kann der Antrieb und die Kraftübertragung in den Reinraum hinein besonders kompakt ausgeführt werden. Durch die kompakte Ausführung kann auch die Auswerfstange besonders stabil ausgeführt werden. Die Auswerfstange kann gleichzeitig zum Auswerfen der Behälterverschlüsse und zur Führung des Rotors und/oder des Verschließkopfs genutzt werden. Dadurch werden für die mechanische Führung des Verschließkopfs bzw. des Rotors besonders wenige Teile benötigt und folglich kann der Verschließer besonders einfach und kostengünstig gebaut werden.

Das Verfahren kann insbesondere mit einem zuvor beschriebenen Verschließer durchgeführt werden. In diesem Fall kann das Verfahren ein Bereitstellen eines zuvor beschriebenen Verschließers umfassen.

Bei dem Verfahren kann bei einer Stromlosigkeit des Elektromotors ein Sicherungselement den Rotor und/oder den Verschließkopf gegen eine Bewegung über eine untere Anschlagsposition hinaus sichern. Dadurch fällt bei der Stromlosigkeit des Elektromotors der Rotor bzw. der Verschließkopf nicht aus dem Verschließer nach unten heraus. Darüber hinaus kann verhindert werden, dass der Verschließkopf über die untere Anschlagsposition nach unten herausragt und dort mit anderen Elementen des Verschließers kollidiert. Dadurch können zusätzlich Beschädigungen des Verschließers bei einer Störung verhindert werden.

Bei dem Verfahren kann bei einem Installations-, Wartungs- oder Reparaturbetrieb das Sicherungselement von der Auswerfstange getrennt werden, um den Rotor und den Verschließer zu entnehmen. Dadurch ist beim Service ein besonders einfaches und schnelles Entnehmen des Rotors bzw. des Verschließkopfs beispielsweise zu einer Reparatur möglich.

Bei dem Verfahren kann bei einem Installations-, Wartungs- oder Reparaturbetrieb die Auswerfstange mit dem Sicherungselement von der Reinraumtrennung getrennt werden, um den Rotor und den Verschließer zu entnehmen. Dadurch kann die gesamte Auswerfstange beim Service aus dem Verschließer entnommen werden. Die Auswerfstange kann von dem Element zur Reinraumtrennung abgeschraubt werden.

Weitere Merkmale und Vorteile der Erfindung werden nachfolgend anhand der in den Figuren dargestellten Ausführungsbeispiele erläutert. Dabei zeigt
- Fig. 1: eine seitliche Darstellung eines erfindungsgemäßen Verschließers beim Aufnehmen eines Behälterverschlusses in einer Schnittansicht;
- Fig. 2: eine seitliche Darstellung des erfindungsgemäßen Verschließers aus Fig. 1 beim Aufschrauben eines Behälterverschlusses in einer Schnittansicht;
- Fig. 3: eine seitliche Darstellung des erfindungsgemäßen Verschließers aus Fig. 1 beim Auswerfen eines Verschlusses in einer Schnittansicht;
- Fig. 4: eine seitliche Darstellung des erfindungsgemäßen Verschließers aus Fig. 1 bei einem Stromausfall in einer Schnittansicht;
- Fig. 5a: eine seitliche Teildarstellung eines erfindungsgemäßen Verschließkopfs mit einem hinund herbewegbaren Sicherungselement in einer Sicherungsposition als Schnittansicht; und
- Fig. 5b: eine seitliche Teildarstellung des Verschließkopfs aus Fig. 5A mit dem Sicherungselement in einer Freigabeposition beim Herausnehmen des Verschließkopfs als Schnittansicht.

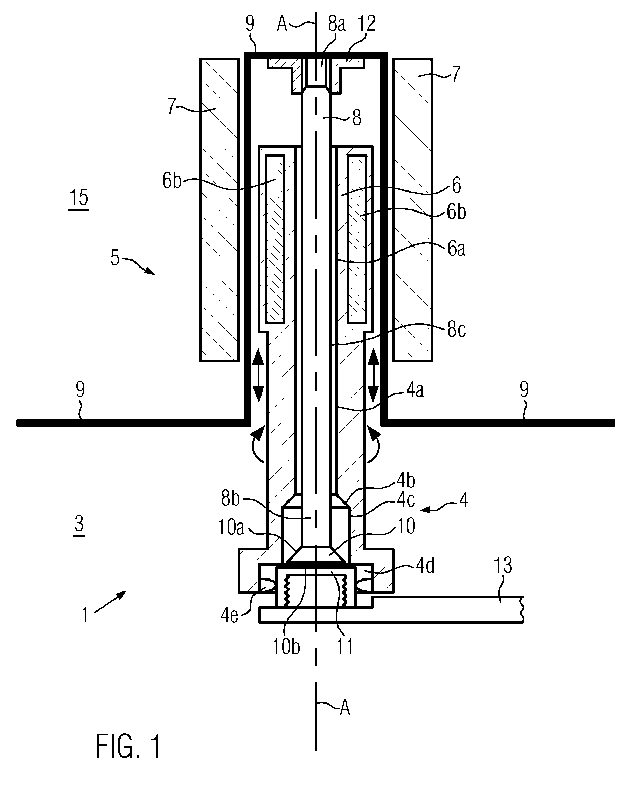

Fig. 1 zeigt eine seitliche Darstellung eines erfindungsgemäßen Verschließers 1 in einer Schnittansicht. In einer Abfüllanlage (nicht gezeigt) können stromabwärts einer Füllmaschine mehrere der gezeigten Verschließer 1 in gleichmäßigem Teilungsabstand auf dem Umkreis eines Verschließkarussells angeordnet sein. Zu sehen ist ein Elektromotor 5 mit einem Stator 7 und einem Rotor 6, wobei zwischen beiden ein Element zur Reinraumtrennung 9 ausgebildet ist. Der mit dem Rotor 6 verbundene Verschließkopf 4 wirkt dabei innerhalb eines Reinraums 3, um Behälter (hier nicht dargestellt) zu verschließen. Zu sehen ist auch eine Auswerfstange 8, die zum Auswurf von Behälterverschlüssen 11 dient, falls diese nicht auf einen Behälter geschraubt wurden.

Mit dem Stator 7 des Elektromotors 5 wird durch das Element zur Reinraumtrennung 9 hindurch ein Magnetfeld erzeugt, das auf die Magnete 6b des Rotors 6 wirkt. Der Stator 7 umfasst dabei in Richtung der Achse A und in Umfangsrichtung jeweils mehrere Magnetspulen. Dadurch ist es möglich, ein derartiges Magnetfeld zu erzeugen, dass der Rotor 6 sowohl um die Achse A gedreht werden kann als auch entlang der Achse A höhenverstellbar ist (entsprechend der Pfeile). Durch das Element zur Reinraumtrennung 9 wird so der Reinraum 3 von der Umgebung 15 hermetisch abgetrennt.

Bei dem Verschließer 1 ist der Verschließkopf 4 mit dem Rotor 6 einteilig verbunden. Auf der zentralen Achse A des Rotors 6 bzw. des Verschließers 4 befindet sich eine zylindrische Durchgangsbohrung mit den zylindrischen Innenflächen 4a, 6a. Diese dienen als Gleitlager gegenüber der Auswerfstange 8, welche ihrerseits eine zylindrische Außenfläche 8c aufweist. Die zylindrische Außenfläche 8c und die zylindrischen Innenflächen 4a, 6a sind zueinander als Spielpassung ausgeführt.

Am ersten Ende 8a (oben) der Auswerfstange 8 befindet sich ein Schraubgewinde. Über das Gewinde ist die Auswerfstange 8 in die Aufnahme 12 eingeschraubt, welche ihrerseits mit dem Element zur Reinraumtrennung 9 fest verbunden ist. Dadurch ist die Auswerfstange 8 stabil mit dem Element zur Reinraumtrennung 9 verbunden und bietet eine genaue Führung des Rotors 6 bzw. des Verschließkopfs 4 zur Ausführung der Hub-/Drehbewegung. Weiterhin kann die Auswerfstange 8 beispielsweise für Wartungsarbeiten am Rotor 6 aus der Aufnahme 12 herausgeschraubt werden und somit Rotor 6 und Auswerfstange 8 entnommen werden.

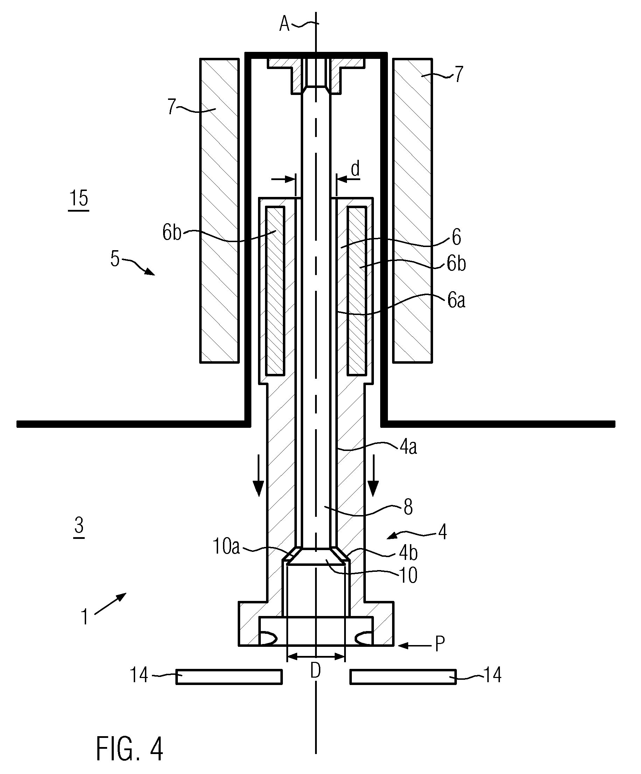

Am unteren Ende 8b der Auswerfstange 8 befindet sich ein Sicherungselement 10, das als mechanischer Anschlag für den Verschließkopf 4 ausgebildet ist. Hierbei weist das Sicherungselement 10 eine konische Fläche 10a auf und der Verschließer 4 eine entsprechend konische Gegenfläche 4b. Dadurch begrenzt das Sicherungselement 10 die Bewegung des Verschließers 4 nach unten (genauer in der Figurenbeschreibung für Fig. 4 beschrieben). Für den Freilauf des Sicherungselements 10 im Verschließkopf 4 ist der Durchmesser der zylindrischen Innenfläche 4c größer ausgebildet als der des Sicherungselements 10.

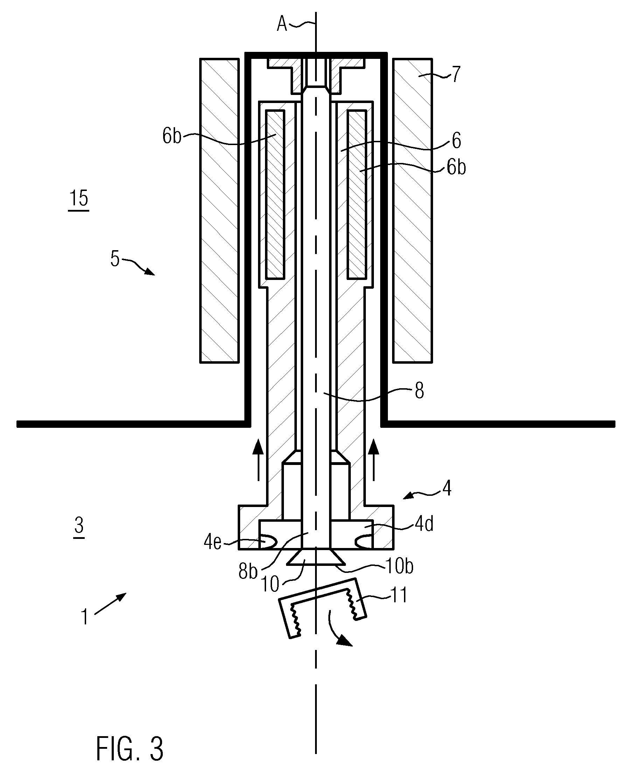

Darüber hinaus verfügt das Sicherungselement 10 eine untere Stirnfläche 10b zum Auswerfen der Behälterverschlüsse 11 (genauer in der Figurenbeschreibung für Fig. 3 beschrieben). Das Sicherungselement 10 kann überdies über ein Gewinde (hier nicht dargestellt) von dem unteren Ende 8b der Auswerfstange 8 abgeschraubt werden, um den Verschließkopf 4 bzw. den Rotor 6 aus dem Verschließer 1 beim Service zu entnehmen.

In der Fig. 1 ist ebenfalls zu sehen, dass der Verschließer 4 einen Behälterverschluss 11 von der Pick-and-Place-Station 13 aufnimmt. Dabei werden die Verschlüsse 11 in einen Aufnahmebereich 4d mit Hilfe von Greiflippen 4e aufgenommen. Zu sehen ist auch, dass dabei die Auswerfstange 8 nicht in den Aufnahmebereich 4d hineinragt.

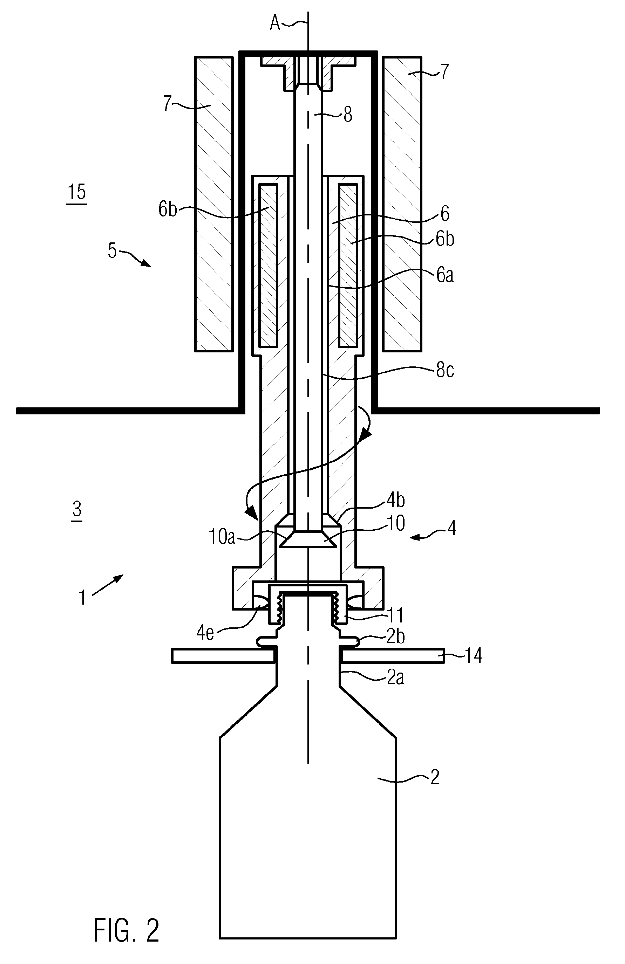

Fig. 2 zeigt eine seitliche Darstellung des erfindungsgemäßen Verschließers 1 aus der Fig. 1 beim Verschließen eines Behälters 2 mit einem Behälterverschluss 11 in einer Schnittansicht. Zu sehen ist, dass der Behälter 2 am Hals 2a und dem Kragen 2b in einem Aufnahmeelement 14 aufgenommen ist. Weiter kann sich der Behälter 2 weder um die Achse A verdrehen, noch nach unten absenken. Der Verschließer 1 verschließt den Behälter 2 mit einem Behälterverschluss 11 (Drehverschluss) über eine Hub-/Drehbewegung.

Der Stator 7 erzeugt dabei ein derartiges Magnetfeld, dass sich der Rotor 6 des Elektromotors 5 in einer spiralförmigen Bewegung um die Achse A sowohl rechtsherum dreht als auch absenkt. Diese spiralförmige Bewegung entspricht der Steigung des Gewindes des Behälterverschlusses 11.

Durch die erfindungsgemäße Ausbildung des Verschließers 1 kann dieser die gewünschte Hub-/Drehbewegung ohne eine aufwändige Steuerkurve ausüben und gleichzeitig erfolgt eine hermetische Trennung des Reinraums 3 gegenüber der Umgebung 15 mit dem Element zur Reinraumtrennung 9, so dass keine Verunreinigungen beim Verschließen in den Behälter 2 hinein gelangen.

Zu sehen ist auch, dass beim Verschließen die Auswerfstange 8 nicht in den Aufnahmebereich 4d hineinragt.

Fig. 3 zeigt eine seitliche Darstellung des erfindungsgemäßen Verschließers 1 beim Auswerfen eines Behälterverschlusses 11 in einer Schnittansicht. Falls nun beim Verschließen ein Behälter 2 in der in Fig. 2 gezeigten Darstellung fehlt, verbleibt der Verschluss 11 in dem Verschließkopf 4. Um eine Kollision zu vermeiden, wird dieser vor der Aufnahme eines weiteren Behälterverschlusses 11 ausgeworfen. Dabei wird der Verschließkopf 4 über den Rotor 6 soweit angehoben, dass die Auswerfstange 8 in den Aufnahmebereich 4d soweit hineinragt, dass sich der Verschluss 11 nach unten aus den Greiflippen 4e im Verschließkopf 4 herauslöst und abfällt. Dabei berührt die Stirnfläche 10b des Sicherungselements 10, welches am unteren Ende 8b der Auswerfstange 8 angebracht ist, den Verschluss 11 und drückt diesen nach unten heraus. Anschließend ist der Verschließkopf 4 wieder frei zur Aufnahme eines weiteren Behälterverschlusses 11.

Fig. 4 zeigt eine seitliche Darstellung des erfindungsgemäßen Verschließers 1 aus der Fig. 1 in einer unteren Anschlagsposition P. Zu sehen ist, wie nach einem Stromausfall der Verschließkopf 4 bzw. der Rotor 6 nicht mehr von den magnetischen Kräften des Stators 7 gehalten wird und so nach unten gefallen ist.

Dabei weist die konische Fläche 10a des Sicherungselements 10 einen äußeren Durchmesser D auf, der größer ist als der Durchmesser d der zylindrischen Innenflächen 4a, 6a des Verschließers 4 bzw. des Rotors 6. Dadurch wird verhindert, dass der Verschließer 4 bzw. der Rotor 6 weiter über die untere Anschlagsposition P nach unten aus dem Verschließer 1 herausfallen. Dabei kommt als mechanischer Anschlag die konische Fläche 10a mit der entsprechend konischen Gegenfläche 4b des Verschließers 4 in Kontakt. Die untere Anschlagsposition P ist dabei so gewählt, dass der Verschließer 4 an seinem unteren Ende nicht mit der Aufnahme 14 kollidiert. Dadurch wird eine Beschädigung des Verschließkopfs 4 und/oder der Aufnahme 14 bei einem Stromausfall vermieden.

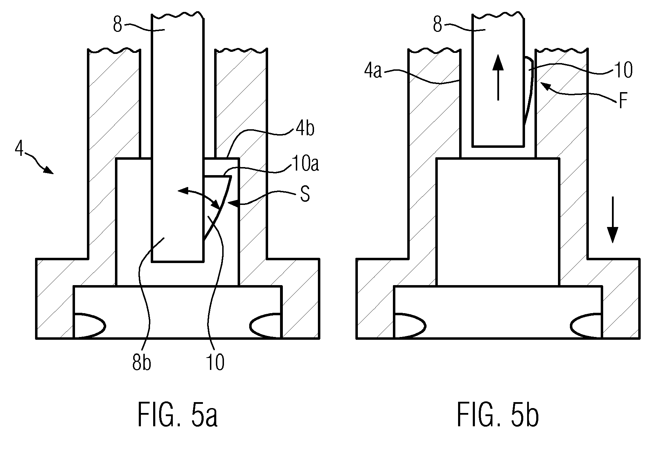

In den Fig. 5a, 5b ist eine seitliche Teildarstellung des Verschließkopfs 4 eines erfindungsgemäßen Verschließers 1 in einer Schnittansichten gezeigt, wobei das Sicherungselement 10 zwischen einer Sicherungsposition S und einer Freigabeposition F hin- und herbewegbar ist.

Das Sicherungselement 10 ist hierbei seitlich am zweiten, unteren Ende 8b der Auswerfstange 8 angebracht und dreiecksförmig ausgebildet. Innerhalb des zweiten Endes 8b der Auswerfstange 8 befindet sich dabei eine Feder (hier nicht dargestellt), die in der Fig. 5a eine Kraft nach rechts bzw. nach außen auf das Sicherungselement 10 ausübt. In der Sicherungsposition S hat dabei das Sicherungselement 10 eine obere, plane Fläche 10a, die den mechanischen Anschlag für die plane Gegenfläche 4b im Verschließkopf 4 bildet. Beim Herabfallen des Verschließkopfs 4 wird die vertikale Bewegung durch diesen mechanischen Anschlag nach unten begrenzt.

Beim Service kann nun der Benutzer das Sicherungselement 10 in der Fig. 5a nach links soweit in die Auswerfstange 8 hineindrücken, dass es dann mit der Auswerfstange 8 einen so kleinen Querschnitt bildet, dass es durch die zylindrische Innenfläche 4a des Verschließkopfs 4 hindurch passt. Folglich ist nun der Verschließkopf 4 in der Fig. 5b in einer Freigabeposition freigegeben, so dass er vom Benutzer nach unten aus dem Verschließer 1 entfernt werden kann.

Dadurch ist es auf einfache Weise möglich, mit dem hin- und herbewegbaren Sicherungselement 10 den Verschließkopf 4 bei einem Service aus dem Verschließer 1 zu entfernen.

Es versteht sich, dass in den zuvor beschriebenen Ausführungsbeispielen genannten Merkmale nicht auf diese speziellen Kombinationen beschränkt sind und in beliebigen anderen Kombinationen möglich sind.

## Patentansprüche

1. Verschließer (1) für Behälter (2), insbesondere Flaschen, mit einem, in einem Reinraum (3) wirkenden Verschließkopf (4), mit einem Elektromotor (5) mit mindestens einem Rotor (6) und mindestens einem Stator (7),
wobei der Verschließkopf (4) mit dem Rotor (6) verbunden ist und zwischen dem Rotor (6) und dem Stator (7) ein Element zur Reinraumtrennung (9) ausgebildet ist, **dadurch gekennzeichnet, dass**
eine Auswerfstange (8) zum Auswerfen von Behälterverschlüssen (11) aus dem Verschließkopf (4) vorgesehen ist, welche
ein erstes und ein zweites Ende (8a, 8b) umfasst, wobei sie an dem ersten Ende (8a) mit dem Element zur Reinraumtrennung (9) verbunden ist, und wobei sie als Führung des Rotors(6) und/oder des Verschließkopfs (4) ausgebildet ist.

2. Verschließer (1) nach Anspruch 1, wobei der Rotor (6) und der Verschließkopf (4) um die Auswerfstange (8) herum und konzentrisch zu deren Längsachse (A) angeordnet sind.

3. Verschließer (1) nach wenigstens einem der vorangegangenen Ansprüche, wobei eine zylindrische Außenfläche (8c) der Auswerfstange (8) und eine zylindrische Innenfläche (6a) des Rotors (6) und/oder eine zylindrische Innenfläche (4a) des Verschließkopfs (4) als Gleitlager ausgebildet sind.

4. Verschließer (1) nach wenigstens einem der vorangegangenen Ansprüche, wobei ein Sicherungselement (10) mit der Auswerfstange (8) fest oder lösbar verbunden ist und als mechanischer Anschlag für eine untere Anschlagsposition (P) des Verschließkopfs (4) ausgebildet ist.

5. Verschließer (1) nach Anspruch 4,
wobei das Sicherungselement (10) zur Ausbildung des mechanischen Anschlags eine plane, konische und/oder sphärische Fläche (10a) umfasst, die insbesondere einen größeren Außendurchmesser (D) aufweist als die Auswerfstange (8), und
wobei der Verschließkopf (4) oder der Rotor (6) eine entsprechende Gegenfläche (4b) umfasst.

6. Verschließer (1) nach Anspruch 4 oder 5,
wobei das Sicherungselement (10) mit dem zweiten Ende (8b) der Auswerfstange (8) verbunden ist, insbesondere wobei eine Stirnfläche (10b) des Sicherungselements (10) zum Auswurf von Behälterverschlüssen (11) ausgebildet ist.

7. Verschließer (1) nach wenigstens einem der Ansprüche 4 - 6,
wobei das Sicherungselement (10) den mechanischen Anschlag in einer Sicherungsposition (S) bildet und in einer Freigabeposition (F) eine Entnahme des Verschließkopfs (4) aus dem Verschließer (1) heraus freigibt, wobei das Sicherungselement (10) zwischen der Sicherungsposition (S) und der Freigabeposition (F) hin- und her bewegbar ausgebildet ist.

8. Abfüllanlage mit einem Verschließer (1) nach wenigstens einem der Ansprüche 1 - 7.

9. Verfahren zum Verschließen von Behältern (2), insbesondere von Flaschen, mit Verschlüssen (11), mit einem Verschließer gemäß einem der Ansprüche 1 - 8, wobei der Stator (7) des Elektromotors (5) ein Magnetfeld erzeugt, das durch das Element zur Reinraumtrennung (9) hindurch zur Bewegung des Rotors (6) wirkt und der Rotor (6) den Verschließkopf (4) antreibt, wobei die Behälterverschlüsse (11) mit der Auswerfstange (8) aus dem Verschließkopf (4) ausgeworfen werden können und die Auswerfstange (8) den Rotor (6) und/oder den Verschließkopf (4) führt.

10. Verfahren nach Anspruch 9,
wobei bei einer Stromlosigkeit des Elektromotors (5) ein Sicherungselement (10) den Rotor (6) und/oder den Verschließkopf (4) gegen eine Bewegung über eine untere Anschlagsposition (P) hinaus sichert.

11. Verfahren nach Anspruch 9 oder 10,
wobei bei einem Installations-, Wartungs- oder Reparaturbetrieb das Sicherungselement (10) von der Auswerfstange (8) getrennt wird, um den Rotor (6) und den Verschließkopf (4) zu entnehmen.

12. Verfahren nach Anspruch 9 oder 10,
wobei bei einem Installations-, Wartungs- oder Reparaturbetrieb die Auswerfstange (8) mit dem Sicherungselement (10) von der Reinraumtrennung (9) getrennt wird, um den Rotor (6) und den Verschließkopf (4) zu entnehmen.

## Claims

1. Capper (1) for containers (2), particularly bottles, comprising
a capping head (4) which is operative in a cleanroom (3),
an electric motor (5) with at least one rotor (6) and at least one stator (7),
the capping head (4) being connected to the rotor (6), and an element for cleanroom separation (9) being formed between the rotor (6) and the stator (7),
**characterized in that**
an ejection rod (8) is provided for ejecting container caps (11) out of the capping head (4), the ejection rod comprising a first end and a second end (8a, 8b), wherein at the first end (8a) it is connected to the element for cleanroom separation (9), and wherein it is configured as a guide of the rotor (6) and/or of the capping head (4).

2. Capper (1) according to claim 1, wherein the rotor (6) and the capping head (4) are arranged around the ejection rod (8) and concentric to the longitudinal axis (A) thereof.

3. Capper (1) according to at least one of the preceding claims, wherein a cylindrical outer surface (8c) of the ejection rod (8) and a cylindrical inner surface (6a) of the rotor (6) and/or a cylindrical inner surface (4a) of the capping head (4) are formed as slide bearings.

4. Capper (1) according to at least one of the preceding claims, wherein a securing element (10) is firmly or detachably connected to the ejection rod (8) and is configured as a mechanical stop for a lower stop position (P) of the capping head (4).

5. Capper (1) according to claim 4,
wherein the securing element (10) for the formation of the mechanical stop comprises a plane, conical and/or spherical surface (10a) which particularly has a greater outer diameter (D) than the ejection rod (8), and
wherein the capping head (4) or the rotor (6) has a corresponding mating surface (4b).

6. Capper (1) according to claim 4 or 5,
wherein the securing element (10) is connected to the second end (8b) of the ejection rod (8), particularly wherein a front face (10b) of the securing element (10) is configured to eject container caps (11).

7. Capper (1) according to at least one of claims 4 to 6,
wherein the securing element (10) forms the mechanical stop in a securing position (S) and, in a release position (F), allows a withdrawal of the capping head (4) out of the capper (1), wherein the securing element (10) is configured to reciprocate between the securing position (S) and the release position (F).

8. Filling system with a capper (1) according to at least one of claims 1 to 7.

9. Method for capping containers (2), particularly bottles (2), with caps (11), comprising a capper according to any one of claims 1 to 8, wherein the stator (7) of the electric motor (5) generates a magnetic field which is operative through the element for cleanroom separation (9) for movement of the rotor (6), and the rotor (6) drives the capping head (4), wherein the container caps (11) can be ejected with the ejection rod (8) out of the capping head (4) and the ejection rod (8) guides the rotor (6) and/or the capping head (4).

10. Method according to claim 9,
wherein in a currentless state of the electric motor (5) a securing element (10) secures the rotor (6) and/or the capping head (4) against a movement beyond a lower stop position (P).

11. Method according to claim 9 or 10,
wherein during installation, maintenance or repair work the securing element (10) is separated by the ejection rod (8) to remove the rotor (6) and the capping head (4).

12. Method according to claim 9 or 10,
wherein during installation, maintenance or repair work the ejection rod (8) is separated with the securing element (10) from the cleanroom separation (9) to remove the rotor (6) and the capping head (4).

## Revendications

1. Dispositif de fermeture (1) pour récipients ou contenants (2), notamment des bouteilles, comprenant une tête de fermeture (4) agissant dans une chambre stérile (3) ou en conditions de salle blanche, et comprenant un moteur électrique (5) comportant au moins un rotor (6) et un stator (7), dispositif
dans lequel la tête de fermeture (4) est reliée au rotor (6), et dans lequel entre le rotor (6) et le stator (7) est formé un élément d'isolement de chambre stérile (9), **caractérisé**
**en ce qu'**il est prévu une tige d'éjection (8) pour éjecter des bouchons de fermeture de contenant (11) de la tête de fermeture (4) et comportant une première et une deuxième extrémité (8a, 8b), ladite tige d'éjection étant, à sa première extrémité (8a), reliée à l'élément d'isolement de chambre stérile (9), et étant configurée en tant que guidage du rotor (6) et/ou de la tête de fermeture (4).

2. Dispositif de fermeture (1) selon la revendication 1, dans lequel le rotor (6) et la tête de fermeture (4) sont agencés autour de la tige d'éjection (8) et concentriquement à son axe longitudinal (A).

3. Dispositif de fermeture (1) selon l'une au moins des revendications précédentes, dans lequel une surface extérieure cylindrique (8c) de la tige d'éjection (8) et une surface intérieure cylindrique (6a) du rotor (6) et/ou une surface intérieure cylindrique (4a) de la tête de fermeture (4) sont réalisées en tant que palier lisse.

4. Dispositif de fermeture (1) selon l'une au moins des revendications précédentes, dans lequel un élément d'arrêt de sécurité (10) est relié de manière fixe ou amovible à la tige d'éjection (8), et est configuré pour former une butée mécanique d'une position de butée inférieure (P) de la tête de fermeture (4).

5. Dispositif de fermeture (1) selon la revendication 4, dans lequel l'élément d'arrêt de sécurité (10) comporte, pour former la butée mécanique, une surface (10a) plane, conique et/ou sphérique, qui présente notamment un diamètre extérieur (D) plus grand que celui de la tige d'éjection (8), et dans lequel la tête de fermeture (4) ou le rotor (6) comporte une surface conjuguée (4b) correspondante.

6. Dispositif de fermeture (1) selon la revendication 4 ou la revendication 5, dans lequel l'élément d'arrêt de sécurité (10) est relié à la deuxième extrémité (8b) de la tige d'éjection (8), notamment dans lequel une surface frontale (10b) de l'élément d'arrêt de sécurité (10) est configurée pour l'éjection de bouchons de fermeture de contenant (11).

7. Dispositif de fermeture (1) selon l'une au moins des revendications 4 - 6, dans lequel l'élément d'arrêt de sécurité (10) forme la butée mécanique dans une position d'arrêt de sécurité (S) et autorise, dans une position de dégagement (F), une extraction de la tête de fermeture (4) du dispositif de fermeture (1), l'élément d'arrêt de sécurité (10) étant conçu de manière à pouvoir être mobile de manière alternée entre la position d'arrêt de sécurité (S) et la position de dégagement (F).

8. Installation de conditionnement par remplissage comprenant un dispositif de fermeture (1) selon l'une au moins des revendications 1 - 7.

9. Procédé pour fermer des récipients ou contenants (2), notamment des bouteilles, à l'aide de bouchons de fermeture (11), comprenant un dispositif de fermeture selon l'une des revendications 1 - 8, d'après lequel le stator (7) du moteur électrique (5) produit un champ magnétique, qui agit à travers l'élément d'isolement de chambre stérile (9) pour assurer le mouvement du rotor (6), et le rotor (6) entraîne la tête de fermeture (4), les bouchons de fermeture de contenant (11) pouvant être éjectés de la tête de fermeture (4) à l'aide de la tige d'éjection (8), et la tige d'éjection (8) guidant le rotor (6) et/ou la tête de fermeture (4).

10. Procédé selon la revendication 9, d'après lequel en cas d'une coupure de courant du moteur électrique (5), un élément d'arrêt de sécurité (10) assure un arrêt de sécurité du rotor (6) et/ou de la tête de fermeture (4) à l'encontre d'un mouvement de déplacement au-delà d'une position de butée inférieure (P).

11. Procédé selon la revendication 9 ou la revendication 10, d'après lequel lors d'un service en mode d'installation, d'entretien ou de réparation, on sépare l'élément d'arrêt de sécurité (10) de la tige d'éjection (8), en vue de retirer ou déposer le rotor (6) et la tête de fermeture (4).

12. Procédé selon la revendication 9 ou la revendication 10, d'après lequel lors d'un service en mode d'installation, d'entretien ou de réparation, on sépare la tige d'éjection (8) avec l'élément d'arrêt de sécurité (10) de l'élément d'isolement de chambre stérile (9), en vue de retirer ou déposer le rotor (6) et la tête de fermeture (4).
